**Europäisches Patentamt**

**European Patent Office**

**Office européen des brevets**

(11) Publication number : **0 490 609 A2**

# EUROPEAN PATENT APPLICATION

(21) Application number : **91311420.3**

(22) Date of filing : **09.12.91**

(51) Int. Cl.⁵ : **G02B 6/44**

(30) Priority : **13.12.90 GB 9027074**

(43) Date of publication of application :
**17.06.92 Bulletin 92/25**

(84) Designated Contracting States :
**AT BE CH DE DK ES FR GB GR IT LI LU NL SE**

(71) Applicant : **BICC Public Limited Company**
**Devonshire House Mayfair Place**
**London W1X 5FH (GB)**

(71) Applicant : **CORNING LIMITED**
**Wear Glass Works**
**Sunderland SR4 6EJ (GB)**

(72) Inventor : **Pilkington, Ian**
**1 Maes Celwyn, Coed-y-glyn**
**Wrexham, Clwyd, Wales LL13 7QG (GB)**

(74) Representative : **Boon, Graham Anthony**
**Elkington and Fife Prospect House 8**
**Pembroke Road**
**Sevenoaks, Kent TN13 1XR (GB)**

(54) **Optical fibre termination device.**

(57)  A device is disclosed for use in constructing an optical fibre termination enclosure. The device is in the form of a cover which has means for attaching it to the opening of a box. The cover has means for receiving at least one optical fibre connector to provide an optical connection on the front face of the box, and means on the rear face of the cover for storing excess fibre.

FIGURE 1

This invention relates to an optical fibre termination device.

One way of connecting equipment in a room to incoming and/or outgoing optical fibre transmission lines is to terminate the lines at termination enclosures mounted, for example, on the wall of the room, and then connect the equipment to the enclosures via short lengths of optical fibre known as patch or termination leads. This is preferable to connecting the incoming and/or outgoing lines directly to the equipment, both because it makes it easier to reconfigure the connections and because if any damage occurs to the optical fibres it is likely to be to the patch or termination leads, which can be replaced inexpensively and easily without disturbing the optical fibre transmission lines.

It is an object of the present invention to provide a device which enables an improved optical fibre termination enclosure to be constructed.

According to the present invention there is provided a device for use in constructing an optical fibre termination enclosure, which device is in the form of a cover which has means for attaching it to the opening of a box, the cover having means for receiving at least one optical fibre connector to provide an optical connection on the front face of the box, and means on the rear face of the cover for storing excess fibre.

The device according to the present invention may be used, for example, with optical fibres which are introduced into a duct by blowing, for example as described in EP-A-108590. However, it is to be understood that the invention is also applicable to fibres which are not blown.

In one embodiment of the invention, which is described in more detail below, the cover is hinged to the box. However, the cover may be attached by other means, for example, by screws. However, if the cover is completely removable from the box it may be desirable to use a jig to hold the cover temporarily in place while operations are being carried out on the fibre in the region of the box, the jig being subsequently removed.

An embodiment of the invention is shown in the accompanying drawings, in which:

Figure 1 is an isometric view showing two boxes each with a cover according to the present invention;

Figure 2 is a plan view of a box and cover, with the cover in its fully open position, during the installation procedure;

Figure 3 corresponds to figure 2 but shows the situation after installation, though before the cover has been moved to it closed position.

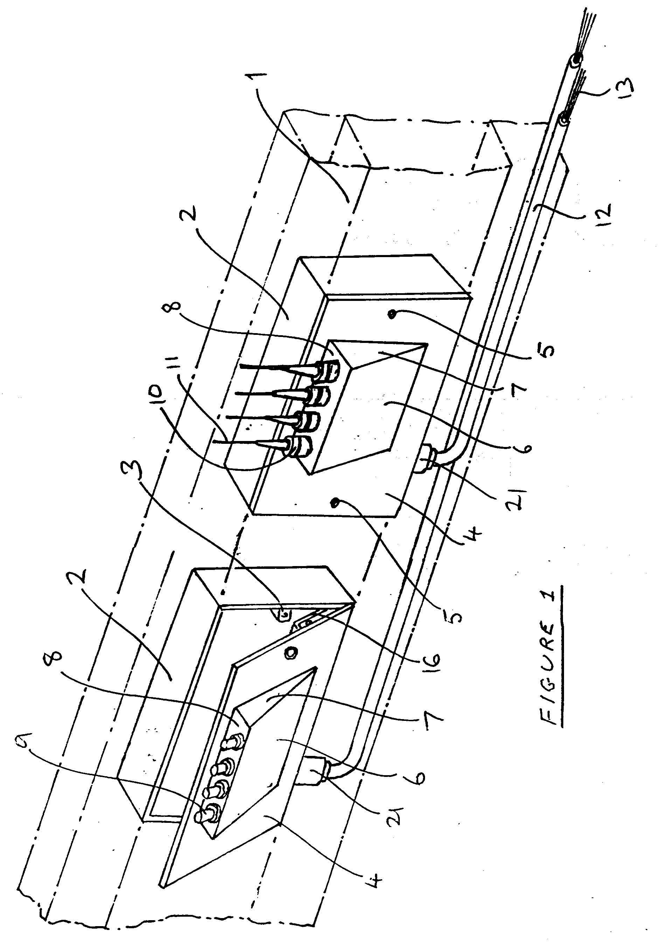

Figure 1 shows a section of trunking 1 which, in use, is mounted around the skirting or other surface of a room. Two boxes 2 are shown fixed to the trunking, though any desired number of boxes may be provided. The boxes can be of the same standard construction as those used to provide other service outlets, for example those used for power sockets size UA2 (British Standard BS4662:1970) and telephone sockets and data outlet sockets with mounting holes to suit BS1363:1984 dimensions. Thus, each box may have a pair of inwardly directed lugs 3, of which one is visible in figure 1, each lug being provided with a threaded aperture to receive a screw.

A cover 4 is hinged to each of the boxes 2. In its closed position, shown in the case of the right hand box in figure 1, the cover 4 is held in place on the box 2 by a pair of screws 5 which are received in the threaded apertures in the lugs 3. A sloping recess is defined in the rear of the cover 4 by an angled surface 6, two triangular surfaces 7 and a horizontal surface 8 at the top. Optical couplers 9 extend from the top surface 8 (see the left hand box in figure 1), and to these are attached external optical connectors 10 mounted on the end of patch or termination leads 11 (see the right hand box in figure 1). The patch or termination leads run to items of equipment or to some further connection arrangement such as a termination rack. Ducts 12, which run inside the trunking 1, open into the underside of each box 2, and optical fibres 13 are blown into the ducts.

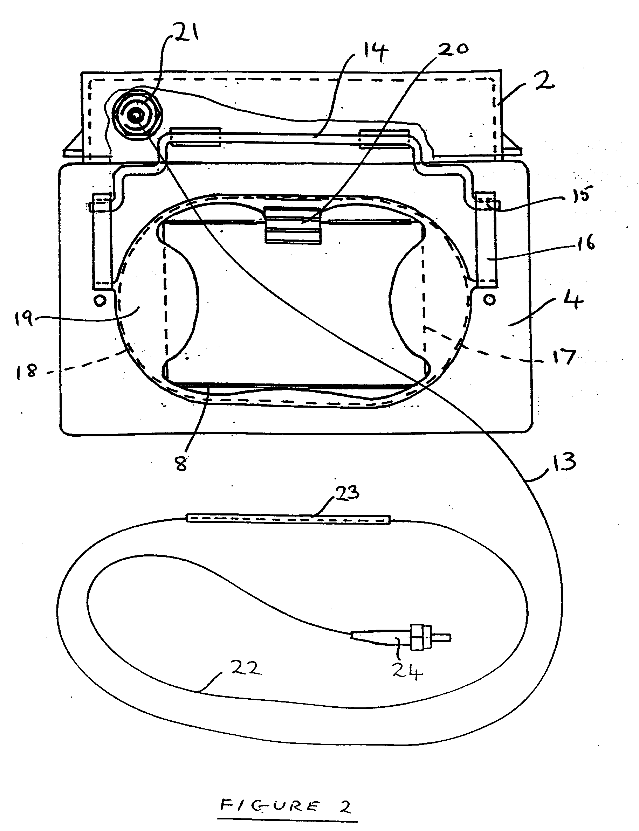

Figure 2 shows the cover 4 in its fully opened position. It can be seen from this that the box 2 and cover 4 are connected by a hinge member 14 the outer end portions 15 of which are slidable in a track defined by a member 16. The recess on the back of the cover, referred to above, can be seen in figure 2 and is denoted by reference numeral 17.

A fibre storage area is provided on the rear side of the cover. The perimeter of this area is defined by a wall 18 which extends rearwardly from the rear face of the cover, i.e. out of the plane of the paper in figure 2. This wall has a "race track" shape, and has two opposing straight sections connected by two opposing semi-circular sections. The fibre storage area is partly covered at each end by a respective ear 19. The rear of the cover also carries a clip 20 adapted to receive one or more splice protection sleeves. In the illustrated embodiment the clip is designed to receive three such sleeves, though this is purely by way of example.

In the situation shown in figure 2, an optical fibre 13 has been introduced through a duct 12 and a duct connector 21 into the interior of the box 2. The fibre could be so introduced, for example, by blowing. It is to be understood that although the procedure just described suggests the fibre passing along the duct 12, through the duct connector 21 and thence into the box. the reverse could be the case. The fibre could be blown from the box out through the duct connector 21 and thence along the duct 12. A sufficient length of fibre 13, say 0.5 to 1 m. thereof, protrudes from the duct connector 21 to enable a fibre tail 22 having an optical connector 24 thereon to be connected to the fibre 13 by a fusion splice. The protruding length of fibre 13 is enough to allow for more than one attempt at splicing to be made, in case the first attempt is unsuccessful. The spliced joint is covered by a protection sleeve 23. The fibre tail 22 is typically 200 - 300 mm in length.

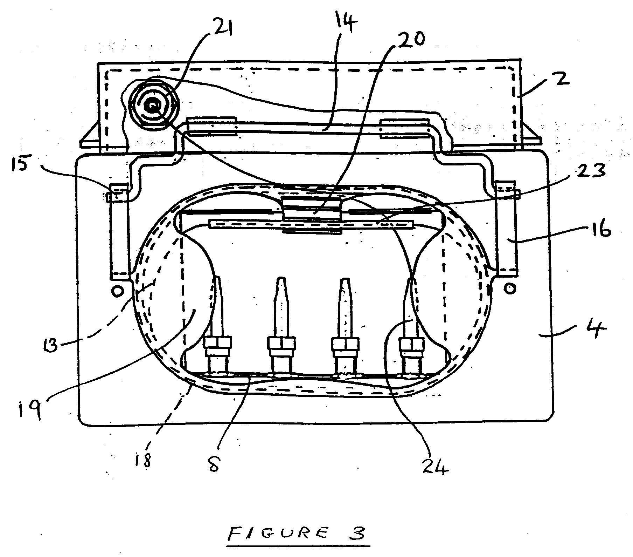

As shown in figure 3, the excess length of fibre 13 is laid in coils in the fibre storage area, and the sleeve 23 is clipped into the clip device 20. The optical connector 24 is placed in optical communication with the lower end of the coupler 9. In the embodiment of figure 3 up to four fibres would be dealt with in this way, and figure 3 shows the connectors 24 therefor. The cover is then moved to its closed position and secured by the screws 5.

Various modifications can be made to what is described above. For example, the fusion splice can be replaced by a mechanical splice, or splicing can be dispensed with altogether in favour of field termination. In field termination optical connectors 24 are attached directly, on site, to the fibres 13, without using fibre tails.

The cover described above performs two main functions. Thus, in the open position it enables each fibre to be stored as it is terminated, and in the closed position, it stores each fibre in such a way as to protect it and provides a connection point for patch or termination leads.

## Claims

1. A device for use in constructing an optical fibre termination enclosure, which device is in the form of a cover which has means for attaching it to the opening of a box, the cover having means for receiving at least one optical fibre connector to provide an optical connection on the front face of the box, and means on the rear face of the cover for storing excess fibre.

2. A device according to claim 1, wherein the means for storing excess fibre comprises a wall extending from the rear face of the cover and defining a storage area.

3. A device according to claim 2, wherein at least one protrusion extends from the wall partly over the said storage area to assist in retaining excess fibre in the said storage area.

4. A device according to any preceding claim, wherein the rear face of the cover is provided with a splice clip for retaining at least one fibre splice therein.

5. A device according to any preceding claim, comprising means for enabling it to be pivotally attached to the said box.

6. An optical fibre termination enclosure comprising a box having an opening, and a device as claimed in any preceding claim attached to the said opening.

FIGURE 1

FIGURE 2

FIGURE 3